# EUROPEAN PATENT SPECIFICATION

(11) **EP 2 017 987 B1**
(45) Date of publication and mention of the grant of the patent: **22.02.2012**
(21) Application number: 07014333.4
(22) Date of filing: 20.07.2007
(51) Int. Cl.: H04J 3/06, H04J 3/16, H04Q 11/00

(54) **Passive optical network with flexible roundtrip delay**
Passives optisches Netzwerk mit flexibler Roundtrip-Verzögerung
Réseau optique passif doté d'un retard aller-retour flexible

(43) Date of publication of application: 21.01.2009
(73) Proprietor: Nokia Siemens Networks Oy, 02610 Espoo (FI)
(72) Inventor: Waldinger, Josef, 84427 St. Wolfgang (DE); Wonka, Rainer, 81379 München (DE)
(74) Representative: Bruglachner, Thomas E.

(56) References cited:
- US-A- 5 606 555
- US-A1- 2003 026 288
- US-A1- 2003 179 769
- "Gigabit-capable Passive Optical Networks (G-PON): Transmission convergence layer specification; G.984.3 (02/04)" ITU-T STANDARD IN FORCE (I), INTERNATIONAL TELECOMMUNICATION UNION, GENEVA,, CH, no. G9843 2/4, 22 February 2004 (2004-02-22), XP017401196

## Description

The work leading to this invention has received funding from the European Community's Seventh Framework Programme FP 7 / 2007 - 2013 under grant agreement no. 026442.

The present invention relates to a passive optical network, comprising an optical line termination device and a first and a second optical network unit, the optical line termination device comprising a processor, the processor being configured to send and receive network signals comprised in frames, and the processor being further configured to create a bandwidth map for each of said optical network units, each bandwidth map specifying an allocated upstream data transmission time period.

A passive optical network (PON) typically comprises an optical line termination (OLT) device at a central office of the network, and a plurality of optical network units (ONU) located at, or near, the end user nodes of the network. OLT and ONUs are configured to build a point to multipoint arrangement. OLT and ONUs are connected via fibre cables and splitters. The splitters are used to split one incoming optical signal passively into two identical outbound signals, so that a plurality of ONUs can be supplied with the signal sent from the OLT. One side effect of such signal splitting is the reduction of the signal level being supplied at the ONUs.

Due to the different distances between the various ONUs and the OLT, a number of different transmission delay times between OLT and ONUs occur in a passive optical network (PON). Thus, in order to allow for bandwidth allocation for upstream data transmission in the PON, that is, data transmission from an ONU to the OLT, systems of the state of the art determine a common delay time that is equal for all ONUs in the system. Usually, this common delay time is determined by the maximum distance between the OLT and the most remote ONU. Since with PONS, upstream data transmissions of ONUs are expected to occur in the same network data frame, ONUs which are located at only a small distance from the OLT suffer from the relatively large delay time induced by the transmission delay of the most remote OLT.

Particularly for applications that require quick data response at end user sites, such transmission delay times often place an undue burden on network usabilities, for instance with network computer game applications or interactive multimedia or audiovisual streaming applications, such as teleconferencing.

It is thus an object of present invention to provide a passive optical network that overcomes the deficiencies of the state of the art and provides for optimal transmission delay times for the ONUs present in the network, as well as an optical line termination device, optical network unit, and network data signal therefore.

This object is achieved by the features of independent claims 1, 7, 11, and 13.

Document US 2003/0179769 A1 discloses a PON network according to the preamble of claim 1.

The invention according to claim 1 provides a passive optical network, comprising an optical line termination device and a first and a second optical network unit, the optical line termination device comprising a processor, the processor being configured to send and receive network signals comprised in frames and the processor being further configured to create a bandwidth map for each of said optical network units, each bandwidth map specifying an allocated upstream data transmission time period, wherein the processor is further configured to include a frame identifier in each of said bandwidth maps, the frame identifier individually specifying a frame for upstream data transmission for the optical network unit, wherein the frame specified for the first optical network unit is different from the frame specified for the second optical network unit, characterized in that the processor is configured to create the frame identifier for each of said optical network units based on a transmission delay time between the optical network unit and the optical line termination device. Thus, upstream data transmission of an ONU can take place in any arbitrary frame that has been specified in the bandwidth map created by the OLT. Consequently, an ONU located at a short distance from the OLT can be assigned a frame for upstream data transmission that occurs only shortly after the frame in which the bandwidth map is transmitted to the ONU in question, while an ONU at a relatively large distance from the OLT can be assigned a frame for upstream data transmission that occurs a longer time after the bandwidth map transmission frame. Thus, the frame that is allocated to an ONU for upstream data transmission can be individually selected according to the individual transmission delay time of the respective ONU.

In this way, the advantageous effect of present invention is achieved in that relatively large PONs can be built without impairing the overall delay time for upstream data transmission. In particular, users located near the OLT can benefit from particularly quick response times.

The invention according to claim 7 provides an optical line termination device for use with the passive optical network, the optical line termination device comprising a processor, the processor being configured to send and receive optical signals comprised in frames and the processor being further configured to create a bandwidth map specifying an allocated upstream data transmission time period, characterized in that the processor is further configured to include a frame identifier in said bandwidth map, the frame identifier individually specifying a frame for upstream data transmission, characterized in that the processor is configured to create the frame identifier based on a transmission delay time between the optical line termination device and an optical network unit in the passive optical network.

Thus, a properly adapted optical line termination (OLT) device is provided for establishing a network according to present invention.

The invention according to claim 13 provides a network data signal embodied in a digital carrier wave for use in the passive optical network, comprising a bandwidth map data structure with an Allocation ID field, a Flags field, a StartTime field, and a StopTime field, characterized in that the Flags field comprises at least one bit specifying a network data frame.

Thus, an appropriate data structure is given for realizing proper interaction between the OLT and at least one ONU when allocating upstream data transmission frames and/or time slots.

Preferred embodiments are defined in the dependent claims.

The invention according to claim 11 provides an optical network unit for use with the passive optical network, comprising communication means for receiving and sending optical signals over the passive optical network, characterized in that it further comprises amplification means to amplify received optical signals and to feed the amplified signals into a further passive optical network

it contains a processor configured to evaluate a frame identifier included in a bandwidth map received over the passive optical network, and to start upstream transmission in the frame specified by the frame identifier.

As an alternative embodiment, the invention as to claim 12 provides an optical network unit for use with the passive optical network, comprising communication means for receiving and sending optical signals over the passive optical network, characterized in that it further comprises amplification means to amplify received optical signals and to feed the amplified signals into a further passive optical network.

Both of the aforementioned aspects of the invention allow to further extend the network beyond its normal physical size limitation. By including such an optical network unit (ONU) in the network, a cascading unit is added that allows to access further ONUs that are connected to said ONU acting as a cascading unit, so that the diminished optical signal can be refreshed in the fashion of a network repeater.

This is generating particularly advantageous synergistic effects in combination with the flexible upstream transmission data frame allocation of present invention. In this way, the difference between the ONU that is closest to the OLT and the ONU that is most distant to the OLT can be further increased. For example, further ONUs can be added behind the ONU acting as the cascading unit without affecting the delay times of the other ONUs. Also, when adding a further ONU behind such a cascading ONU, network operation for ONUs between the OLT and the ONU acting as a cascading unit need not be interrupted for ranging procedures until the minimum delay time for receiving a response from the recently added ONU has passed. Such a minimum delay time can be calculated based on the known delay time between OLT and the ONU acting as a cascading unit.

The invention will be further described with reference to a number of figures:
- Fig. 1 shows: a schematic overview over a network according to an embodiment of the invention;
- Fig. 2 shows: a schematic diagram of a bandwidth map network data structure according to an embodiment of present invention, and
- Fig. 3 shows: a time sequence diagram with timing and interaction between components of the network related to delay time and frame allocation.

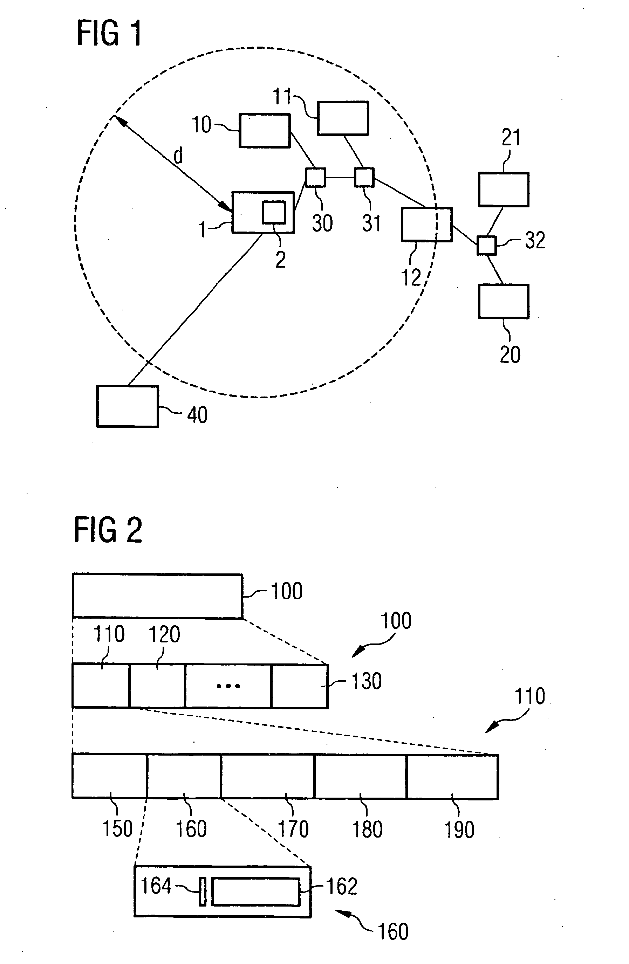

Fig. 1 shows a schematic overview over an embodiment of the passive optical network (PON) according to present invention. Optical line termination (OLT) device 1 contains processor 2 and is connected to a backbone 40. OLT 1 is further connected to optical network units (ONU) 10, 11, 12, 20, 21 via fibre optic cable or other light wave conducting means. The optical data communication line between the OLT and the plurality of ONUs is being split in splitters 30, 31, and 32, respectively, in order to distribute the light wave data signal originating from one light wave conductor to a plurality of receiving units. By splitting the signal, the signal level decreases accordingly.

ONU 12 is configured to serve as a cascading unit. Consequently, the cascading ONU 12 receives optical data signals from the fibre optic cable coming from OLT 1 via splitter 31 and repeats these signals after amplification to a second fibre optic cable connected to ONUs 20 and 21 via splitter 32. ONUs 20 and 21 are said to be cascaded behind the cascading ONU 12. In the same manner, cascading ONU 12 repeats upstream data sent from ONU 20 or 21 to the fibre optic cable leading to OLT 1.

The broken circle indicates the maximum distance d that an ONU may have from the OLT in terms of minimum signal level and/or maximum delay time in the passive optical network. As can be seen from fig. 1, cascaded ONUs 20 and 21 are clearly beyond the maximum distance, that is, the maximum spatial range of the PON.

Processor 2 of OLT 1 is configured to generate bandwidth maps 100, which are illustrated in more detail in fig. 2. Each bandwidth map is are addressed to one of the ONUs 10, 11, 12, 20, 21 to assign time intervals in which an ONU may send data upstream, that is, from the ONU to the OLT. Unlike in conventional PONs, wherein all upstream data communication must take place in one and the same frame of 125 microseconds, the processor 2 of the present embodiment is configured to individually assign a frame for each of the ONUs in which the respective ONU may place its upstream communication data as further specified in the StartTime and StopTime information of the bandwidth map data. This allocation of an individual upstream communication frame is based on the delay time of the data transmission between the OLT and the respective ONU.

Thus, the ONU 10 which is close to the OLT may place its upstream data in an earlier frame than ONU 12. Since the delay time of ONU 10 and ONU 11 do not differ significantly, calculation in processor 2 may result in the same frame being assigned to ONU 10 and ONU 11 for upstream data communication. Consequently, users at ONU 10 and ONU 11 enjoy a quicker data response performance than users at ONU 12, or at ONUs 20 or 21, which are being assigned response frames that are much later due to the larger delay time.

In this manner, and particularly with the help of cascading ONU 12, additional ONUs 20 and 21 could be added to the PON beyond its maximum range d without affecting the delay time of the ONUs already present in the system.

In a scenario, in which ONUs 10, 11, 12, and 20 are already operational in the network, and ONU 21 has recently been added, so that a ranging procedure is to be performed by OLT 1, OLT 1 can continue normal network operation until a minimum delay time that has been calculated for ONU 21 has passed and in which ONU 21 cannot have successfully answered the ranging request of OLT 1. Such a calculation can be based on the known delay time between OLT 1 and cascading ONU 12. Thus, network operation can continue to the largest extent possible when adding new ONUs behind a cascading unit 12.

Fig. 2 shows the bandwidth map network data structure. Bandwidth map allocation data structure is generally defined in ITU-T recommendation G.984.3 and comprises a number of access data fields, each defining network capacity in which upstream data communication may occur. Each of the access data fields 110, 120, 130 in turn comprise an Allocation ID field 150, a Flags field 160, a StartTime field 170, a StopTime field 180, and a CRC field 190.

The Flags field 160 in the embodiment of present invention contains a number of bits (a bit field) 162 that identify a frame which is allocated to an ONU for upstream data communication. Further, Flags field 160 contains one bit which is used as a flag indicating the presence of a cascading ONU 12 in the communication path between the OLT and the ONU addressed in the Allocation ID field 150.

Said bit (flag) indicating the presence of a cascading ONU 12 is, in this example, implemented to indicate that allocation ID field 150 is an extended address field, which may have been extended by 8 or 16 or more bits of address space. Such an extended address space is useful since the number of ONUs participating in the PON according to present invention may be significantly larger than in an usual PON. If, however, a vendor chooses not to use the indicator flag 162, the vendor can use the address field in the usual manner.

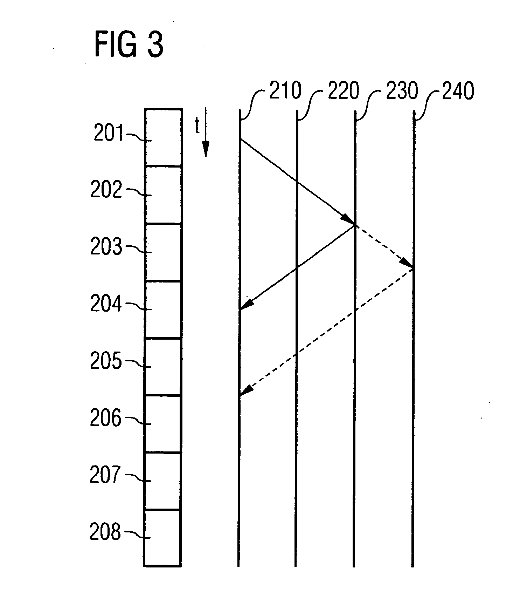

Fig. 3 is a sequential interaction diagram showing communication timelines and communication parties relative to the sequence of frames in the passive optical network.

A message sent from OLT 210 (1 in fig. 1) to ONU 230 (12 in fig. 1) would take at least the time indicated by the continuous arrow going from line 210 to line 230. Thus, the total transmission delay of the roundtrip after an instantaneous response from ONU 230 (the response being indicated by the arrow from line 230 to line 210) amounts to the distance along line 210 from the starting point of the outbound arrow to the receiving point of the inbound arrow along the time axis, that is, from frame 201 to frame 204. In conventional PONs, this roundtrip transmission delay time would be used as the uniform delay time used for all ONUs in the system, for instance for ONU 220 as well, even if a shorter communication roundtrip had been possible for the ONU 220 (10 in fig. 1) which is closer to OLT 1. In such a case, an ONU 240 (20 in fig. 1) that is located beyond the maximum service distance could not be served at all.

In the embodiment of present invention, however, ONU 230 is individually assigned frame 204 for its upstream data transmission, and, in a similar manner, frame 206 is assigned to ONU 240 (20 in fig. 1) for its upstream data communication, without affecting the shorter communication delay and assignment of an earlier frame of ONU 230.

In this manner, the present embodiment provides for optimal transmission delay times for all ONUs present in the network while allowing an extended maximum service range and improved network operation when adding new nodes to the network.

### Reference numerals

- 1: Optical line termination (OLT) device
- 2: Processor
- 10, 11: Optical network unit
- 12: Cascading ONU
- 20, 21: ONU
- 30, 31, 32: Splitter
- 40: Backbone
- 100: Bandwidth map
- 110: First access element of bandwidth map
- 120: Second access element of bandwidth map
- 130: n-th access element of bandwidth map
- 150: Allocation ID field
- 160: Flags field
- 162: Frame identifier bit field
- 164: Cascaded flag bit
- 170: StartTime field
- 180: StopTime field
- 190: CRC field
- 201 - 208: Data frames
- 210: OLT
- 220: ONU 11
- 230: ONU 12
- 240: ONU 20

## Claims

1. Passive optical network, comprising an optical line termination device (1) and a first (12) and a second (10, 20) optical network unit, the optical line termination device comprising a processor (2), the processor being configured to send and receive network signals comprised in frames (201 - 208) and the processor being further configured to create a bandwidth map (100) for each of said optical network units,
each bandwidth map specifying an allocated upstream data transmission time period (170, 180), wherein the processor is further configured to include a frame identifier (162) in each of said bandwidth maps, the frame identifier
individually specifying a frame (204, 206) for upstream data transmission for the optical network unit, wherein the frame (204) specified for the first optical network unit is different from the frame (206) specified for the second optical network unit,
**characterized in that** the processor is configured to create the frame identifier for each of said optical network units based on a transmission delay time between the optical network unit and the optical line termination device.

2. Network according to claim 1, **characterized in that** the frame identifier is included in the Flags field (160) of the bandwidth map.

3. Network according to any one of the preceding claims, **characterized in that** the first optical network unit (12) is configured to connect to the second optical network unit (20), the second optical network unit not being directly connected to the optical line termination device, such that the first optical network unit forms a cascading unit.

4. Network according to any one of the preceding claims, **characterized in that** the processor is further configured to include a flag (164) in the bandwidth map, the
flag being indicative of a cascading unit (12) present in the communication path.

5. Network according to any one of the preceding claims, **characterized in that** the processor is further configured to, upon adding a further optical network unit (21) behind a cascading unit, determine a minimum transmission delay time between the optical network unit and the optical line termination device, and continue normal network service until the minimum transmission delay time has passed.

6. Network according to any one of the preceding claims, **characterized in that** the calculation of the minimum transmission delay time is based on the transmission delay time between the cascading unit and the optical line termination device.

7. Optical line termination device (1) for use with a passive optical network according to any one of claims 1 to 6, the optical line termination device comprising a processor (2), the processor being configured to send and receive optical signals comprised in frames (201 - 208) and the processor being further configured to create a bandwidth map (100) specifying an allocated upstream data transmission time period, wherein the processor is further configured to include a frame identifier (162) in said bandwidth map, the frame identifier individually specifying a frame (204, 206) for upstream data transmission, **characterized in that** the processor is configured to create the frame identifier based on a transmission delay time between the optical line termination device and an optical network unit (10 - 12, 20, 21) in the passive optical network.

8. Optical line termination device according to claim 7, **characterized in that** the frame identifier is included in the Flags field (160) of the bandwidth map.

9. Optical line termination device according to any one of claims 7 or 8, **characterized in that** the processor is further configured to include a flag (164) in the bandwidth map, the flag being indicative of a cascading unit (12) present in the communication path between the optical line termination device and an optical network unit in the passive optical network.

10. Optical line termination device according to any one of claims 7 to 9, **characterized in that** the processor is further configured to, upon adding an optical network unit (21) behind a cascading unit (12) in the passive optical network, determine a minimum transmission delay time between the optical line termination device and the optical network unit and continue normal network service until the minimum transmission delay time has passed.

11. Optical network unit (12) for use with a passive optical network according to any one of claims 1 to 7, comprising communication means for receiving and sending optical signals over the passive optical network, **characterized in that** it further comprises amplification means to amplify received optical signals and to feed the amplified signals back into the network and it contains a processor configured to evaluate a frame identifier (162) included in a bandwidth map (100) received over the passive optical network, and to start upstream transmission in the frame (204) specified by the frame identifier.

12. Optical network unit (12) for use with a passive optical network according to any one of claims 1 to 7, comprising communication means for receiving and sending optical signals over the passive optical network, **characterized in that** it further comprises amplification means to amplify received optical signals and to feed the amplified signals into a further passive optical network.

13. Network data signal embodied in a digital carrier wave for use in a passive optical network according to anyone of claims 1 to 6, comprising a bandwidth map data structure (100) with an Allocation ID field (150), a Flags field (160), a StartTime field (170), and a StopTime field (180) , **characterized in that** the Flags field comprises at least one bit as frame identifier (162) specifying a network data frame (204, 206) for upstream data transmission for the optical network unit.

14. Network data signal according to claim 13,
**characterized in that** the Flags field comprises at least one bit (164) indicative of a cascading unit (12).

## Patentansprüche

1. Passives optisches Netz mit einer Abschlussvorrichtung (1) für optische Leitung und einer ersten (12) und einer zweiten Einheit (10, 20) für optisches Netz, wobei die Abschlussvorrichtung für optische Leitung einen Prozessor (2) umfasst, wobei der Prozessor dazu konfiguriert ist, Netzsignale, die aus Rahmen (201-208) bestehen, zu senden und zu empfangen, und der Prozessor ferner dazu konfiguriert ist, eine Bandbreitenkarte (100) für jede der Einheiten für optisches Netz zu erzeugen, wobei jede Bandbreitenkarte eine zugewiesene Stromaufwärtsdatenübertragungs-Zeitperiode (170, 180) spezifiziert, wobei der Prozessor ferner dazu konfiguriert ist, einen Rahmenidentifikator (162) in jede der Bandbreitenkarten einzufügen, wobei der Rahmenidentifikator individuell einen Rahmen (204, 206) für die Stromaufwärtsdatenübertragung für die Einheit für optisches Netz spezifiziert, wobei der für die erste Einheit für optisches Netz spezifizierte Rahmen (204) von dem für die zweite Einheit für optisches Netz spezifizierten Rahmen (206) verschieden ist,
**dadurch gekennzeichnet, dass** der Prozessor dazu konfiguriert ist, den Rahmenidentifikator für jede der Einheiten für optisches Netz auf der Basis einer Übertragungsverzögerungszeit zwischen der Einheit für optisches Netz und der Abschlussvorrichtung für optische Leitung zu erzeugen.

2. Netz nach Anspruch 1, **dadurch gekennzeichnet, dass** der Rahmenidentifikator im Flag-Feld (160) der Bandbreitenkarte enthalten ist.

3. Netz nach einem der vorangehenden Ansprüche, **dadurch gekennzeichnet, dass** die erste Einheit (12) für optisches Netz dazu konfiguriert ist, mit der zweiten Einheit (20) für optisches Netz zu verbinden, wobei die zweite Einheit für optisches Netz nicht direkt mit der Abschlussvorrichtung für optische Leitung verbunden ist, so dass die erste Einheit für optisches Netz eine Kaskadierungseinheit bildet.

4. Netz nach einem der vorangehenden Ansprüche, **dadurch gekennzeichnet, dass** der Prozessor ferner dazu konfiguriert ist, ein Flag (164) in die Bandbreitenkarte einzufügen, wobei das Flag eine im Kommunikationspfad vorhandene Kaskadierungseinheit (12) angibt.

5. Netz nach einem der vorangehenden Ansprüche, **dadurch gekennzeichnet, dass** der Prozessor ferner dazu konfiguriert ist, beim Hinzufügen einer weiteren Einheit (21) für optisches Netz hinter einer Kaskadierungseinheit eine minimale Übertragungsverzögerungszeit zwischen der Einheit für optisches Netz und der Abschlussvorrichtung für optische Leitung zu bestimmen und den normalen Netzdienst fortzusetzen, bis die minimale Übertragungsverzögerungszeit vergangen ist.

6. Netz nach einem der vorangehenden Ansprüche, **dadurch gekennzeichnet, dass** die Berechnung der minimalen Übertragungsverzögerungszeit auf der Übertragungsverzögerungszeit zwischen der Kaskadierungseinheit und der Abschlussvorrichtung für optische Leitung basiert.

7. Abschlussvorrichtung (1) für optische Leitung zur Verwendung bei einem passiven optischen Netz nach einem der Ansprüche 1 bis 6, wobei die Abschlussvorrichtung für optische Leitung einen Prozessor (2) umfasst, wobei der Prozessor dazu konfiguriert ist, optische Signale, die aus Rahmen (201-208) bestehen, zu senden und zu empfangen, und der Prozessor ferner dazu konfiguriert ist, eine Bandbreitenkarte (100) zu erzeugen, die eine zugewiesene Stromaufwärtsdatenübertragungs-Zeitperiode spezifiziert, wobei der Prozessor ferner dazu konfiguriert ist, einen Rahmenidentifikator (162) in die Bandbreitenkarte einzufügen, wobei der Rahmenidentifikator individuell einen Rahmen (204, 206) für die Stromaufwärtsdatenübertragung spezifiziert, **dadurch gekennzeichnet, dass** der Prozessor dazu konfiguriert ist, den Rahmenidentifikator auf der Basis einer Übertragungsverzögerungszeit zwischen der Abschlussvorrichtung für optische Leitung und der Einheit (10-12, 20, 21) für optisches Netz im passiven optischen Netz zu erzeugen.

8. Abschlussvorrichtung für optische Leitung nach Anspruch 7, **dadurch gekennzeichnet, dass** der Rahmenidentifikator im Flag-Feld (160) der Bandbreitenkarte enthalten ist.

9. Abschlussvorrichtung für optische Leitung nach einem der Ansprüche 7 oder 8, **dadurch gekennzeichnet, dass** der Prozessor ferner dazu konfiguriert ist, ein Flag (164) in die Bandbreitenkarte einzufügen, wobei das Flag eine im Kommunikationspfad zwischen der Abschlussvorrichtung für optische Leitung und einer Einheit für optisches Netz im passiven optischen Netz vorhandene Kaskadierungseinheit (12) angibt.

10. Abschlussvorrichtung für optische Leitung nach einem der Ansprüche 7 bis 9, **dadurch gekennzeichnet, dass** der Prozessor ferner dazu konfiguriert ist, beim Hinzufügen einer Einheit (21) für optisches Netz hinter einer Kaskadierungseinheit (12) im passiven optischen Netz eine minimale Übertragungsverzögerungszeit zwischen der Abschlussvorrichtung für optische Leitung und der Einheit für optisches Netz zu bestimmen und den normalen Netzdienst fortzusetzen, bis die minimale Übertragungsverzögerungszeit vergangen ist.

11. Einheit (12) für optisches Netz zur Verwendung in einem passiven optischen Netz nach einem der Ansprüche 1 bis 7, mit Kommunikationsmitteln zum Empfangen und Senden von optischen Signalen über das passive optische Netz, **dadurch gekennzeichnet, dass** sie ferner Verstärkungsmittel umfasst, um empfangene optische Signale zu verstärken und die verstärkten Signale wieder in das Netz einzuspeisen, und sie einen Prozessor enthält, der dazu konfiguriert ist, einen Rahmenidentifikator (162) auszuwerten, der in einer Bandbreitenkarte (100) enthalten ist, die über das passive optische Netz empfangen wird, und eine Stromaufwärtsübertragung im durch den Rahmenidentifikator spezifizierten Rahmen (204) zu starten.

12. Einheit (12) für optisches Netz zur Verwendung in einem passiven optischen Netz nach einem der Ansprüche 1 bis 7, mit Kommunikationsmitteln zum Empfangen und Senden von optischen Signalen über das passive optische Netz, **dadurch gekennzeichnet, dass** sie ferner Verstärkungsmittel umfasst, um empfangene optische Signale zu verstärken und die verstärkten Signale in ein weiteres passives optisches Netz einzuspeisen.

13. Netzdatensignal, das in einer digitalen Trägerwelle enthalten ist, zur Verwendung in einem passiven optischen Netz nach einem der Ansprüche 1 bis 6, mit einer Bandbreitenkarten-Datenstruktur (100) mit einem Zuweisungs-ID-Feld (150), einem Flag-Feld (160), einem Startzeit-Feld (170) und einem Stoppzeit-Feld (180), **dadurch gekennzeichnet, dass** das Flag-Feld mindestens ein Bit als Rahmenidentifikator (162) umfasst, das einen Netzdatenrahmen (204, 206) zur Stromaufwärtsdatenübertragung für die Einheit für optisches Netz spezifiziert.

14. Netzdatensignal nach Anspruch 13, **dadurch gekennzeichnet, dass** das Flag-Feld mindestens ein Bit (164) umfasst, das eine Kaskadierungseinheit (12) angibt.

## Revendications

1. Un réseau optique passif, comprenant un dispositif de terminaison de ligne optique (1) et une première (12) et une deuxième (10, 20) unité de réseau optique, le dispositif de terminaison de ligne optique comprenant un processeur (2), le processeur étant configuré de façon à envoyer et recevoir des signaux de réseau contenus dans des trames (201 - 208) et le processeur étant configuré en outre de façon à créer une carte de largeur de bande (100) pour chacune desdites unités de réseau optique, chaque carte de largeur de bande spécifiant une période de temps de transmission de données vers l'amont allouée (170, 180), dans lequel le processeur est configuré en outre de façon à inclure un identifiant de trame (162) dans chacune desdites cartes de largeur de bande, l'identifiant de trame spécifiant individuellement une trame (204, 206) pour une transmission de données vers l'amont pour l'unité de réseau optique, dans lequel la trame (204) spécifiée pour la première unité de réseau optique est différente de la trame (206) spécifiée pour la deuxième unité de réseau optique, **caractérisé en ce que** le processeur est configuré de façon à créer l'identifiant de trame pour chacune desdites unités de réseau optique en fonction d'un temps de retard de transmission entre l'unité de réseau optique et le dispositif de terminaison de ligne optique.

2. Un réseau selon la revendication 1, **caractérisé en ce que** l'identifiant de trame est inclus dans le champ Flags (160) de la carte de largeur de bande.

3. Un réseau selon l'une quelconque des revendications précédentes, **caractérisé en ce que** la première unité de réseau optique (12) est configurée de façon à se raccorder à la deuxième unité de réseau optique (20), la deuxième unité de réseau optique n'étant pas directement raccordée au dispositif de terminaison de ligne optique, de sorte que la première unité de réseau optique forme une unité en cascade.

4. Un réseau selon l'une quelconque des revendications précédentes, **caractérisé en ce que** le processeur est configuré en outre de façon à inclure une balise (164) dans la carte de largeur de bande, la balise étant indicative d'une unité en cascade (12) présente dans la voie de communication.

5. Un réseau selon l'une quelconque des revendications précédentes, **caractérisé en ce que** le processeur est configuré en outre de façon à, lors de l'ajout d'une autre unité de réseau optique (21) derrière une unité en cascade, déterminer un temps de retard de transmission minimum entre l'unité de réseau optique et le dispositif de terminaison de ligne optique, et poursuivre un service de réseau normal jusqu'à ce que le temps de retard de transmission minimum se soit écoulé.

6. Un réseau selon l'une quelconque des revendications précédentes, **caractérisé en ce que** le calcul du temps de retard de transmission minimum est basé sur le temps de retard de transmission entre l'unité en cascade et le dispositif de terminaison de ligne optique.

7. Un dispositif de terminaison de ligne optique (1) destiné à une utilisation avec un réseau optique passif selon l'une quelconque des revendications 1 à 6, le dispositif de terminaison de ligne optique comprenant un processeur (2), le processeur étant configuré de façon à envoyer et recevoir des signaux optiques contenus dans des trames (201 - 208) et le processeur étant configuré en outre de façon à créer une carte de largeur de bande (100) spécifiant une période de temps de transmission de données vers l'amont allouée, dans lequel le processeur est configuré en outre de façon à inclure un identifiant de trame (162) dans ladite carte de largeur de bande, l'identifiant de trame spécifiant individuellement une trame (204, 206) pour une transmission de données vers l'amont, **caractérisé en ce que** le processeur est configuré de façon à créer l'identifiant de trame en fonction d'un temps de retard de transmission entre le dispositif de terminaison de ligne optique et une unité de réseau optique (10 - 12, 20, 21) dans le réseau optique passif.

8. Un dispositif de terminaison de ligne optique selon la revendication 7, **caractérisé en ce que** l'identifiant de trame est inclus dans le champ Flags (160) de la carte de largeur de bande.

9. Un dispositif de terminaison de ligne optique selon l'une quelconque des revendications 7 ou 8, **caractérisé en ce que** le processeur est configuré en outre de façon à inclure une balise (164) dans la carte de largeur de bande, la balise étant indicative d'une unité en cascade (12) présente dans la voie de communication entre le dispositif de terminaison de ligne optique et une unité de réseau optique dans le réseau optique passif.

10. Un dispositif de terminaison de ligne optique selon l'une quelconque des revendications 7 à 9, **caractérisé en ce que** le processeur est configuré en outre de façon à, lors de l'ajout d'une unité de réseau optique (21) derrière une unité en cascade (12) dans le réseau optique passif, déterminer un temps de retard de transmission minimum entre le dispositif de terminaison de ligne optique et l'unité de réseau optique et poursuivre un service de réseau normal jusqu'à ce que le temps de retard de transmission minimum se soit écoulé.

11. Une unité de réseau optique (12) destinée à une utilisation avec un réseau optique passif selon l'une quelconque des revendications 1 à 7, comprenant un moyen de communication destiné à recevoir et à envoyer des signaux optiques par l'intermédiaire du réseau optique passif, **caractérisée en ce qu'**elle comprend en outre un moyen d'amplification destiné à amplifier des signaux optiques reçus et à renvoyer les signaux amplifiés dans le réseau, et **en ce qu'**elle contient un processeur configuré de façon à évaluer un identifiant de trame (162) inclus dans une carte de largeur de bande (100) reçu par l'intermédiaire du réseau optique passif, et à démarrer une transmission vers l'amont dans la trame (204) spécifiée par l'identifiant de trame.

12. Une unité de réseau optique (12) destinée à une utilisation avec un réseau optique passif selon l'une quelconque des revendications 1 à 7, comprenant un moyen de communication destiné à recevoir et à envoyer des signaux optiques par l'intermédiaire du réseau optique passif, **caractérisée en ce qu'**elle comprend en outre un moyen d'amplification destiné à amplifier des signaux optiques reçus et à renvoyer les signaux amplifiés dans un autre réseau optique passif.

13. Un signal de données de réseau incorporé dans une onde porteuse numérique destiné à une utilisation dans un réseau optique passif selon l'une quelconque des revendications 1 à 6, comprenant une structure de données à carte de largeur de bande (100) avec un champ Allocation ID (150), un champ Flags (160), un champ StartTime (170) et un champ StopTime (180), **caractérisé en ce que** le champ Flags comprend au moins un bit en tant qu'identifiant de trame (162) spécifiant une trame de données de réseau (204, 206) destinée à une transmission de données vers l'amont pour l'unité de réseau optique.

14. Un signal de données de réseau selon la revendication 13, **caractérisé en ce que** le champ Flags comprend au moins un bit (164) indicatif d'une unité en cascade (12).
